# EUROPEAN PATENT SPECIFICATION

(11) **EP 2 130 726 B1**
(45) Date of publication and mention of the grant of the patent: **17.07.2013**
(21) Application number: 08722380.6
(22) Date of filing: 18.03.2008
(51) Int. Cl.: B60R 25/02, E05B 65/12

(54) **STEERING LOCK DEVICE**
LENKSCHLOSSVORRICHTUNG
DISPOSITIF DE VERROUILLAGE DE DIRECTION

(30) Priority: 29.03.2007 JP 2007089112
(43) Date of publication of application: 09.12.2009
(73) Proprietor: Alpha Corporation, Yokohama-shi, Kanagawa 236-0004 (JP)
(72) Inventor: TAKAHIRO Okada, Yokohama-shi Kanagawa 236-004 (JP)
(74) Representative: Grünecker, Kinkeldey, Stockmair & Schwanhäusser
(86) International application number: PCT/JP2008/054986
(87) International publication number: WO 2008/123073

(56) References cited:
- JP-A- 10 264 770
- JP-A- 2004 231 122
- JP-A- 2004 314 965
- JP-A- 2005 335 430
- US-A1- 2004 148 983

## Description

### TECHNICAL FIELD

The present invention relates to a steering lock device which is installed in an automobile or the like, and which includes what is termed as a "deadlock section."

### BACKGROUND ART

A steering lock device according to the preamble of claim 1 is disclosed in US 2004/1489983A. As shown in Figs. 1 and 2, this electric steering lock device 100 includes a frame 101 and a cover (not illustrated) for covering the top surface of this frame 101. The frame 101 includes a frame main body 102 and a rod guide part 103 protruding on this frame main body 102. An attachment part (not illustrated) is provided to the rod guide part 103. The electric steering lock device 100 is fixed to a steering post (not illustrated) with this attachment part.

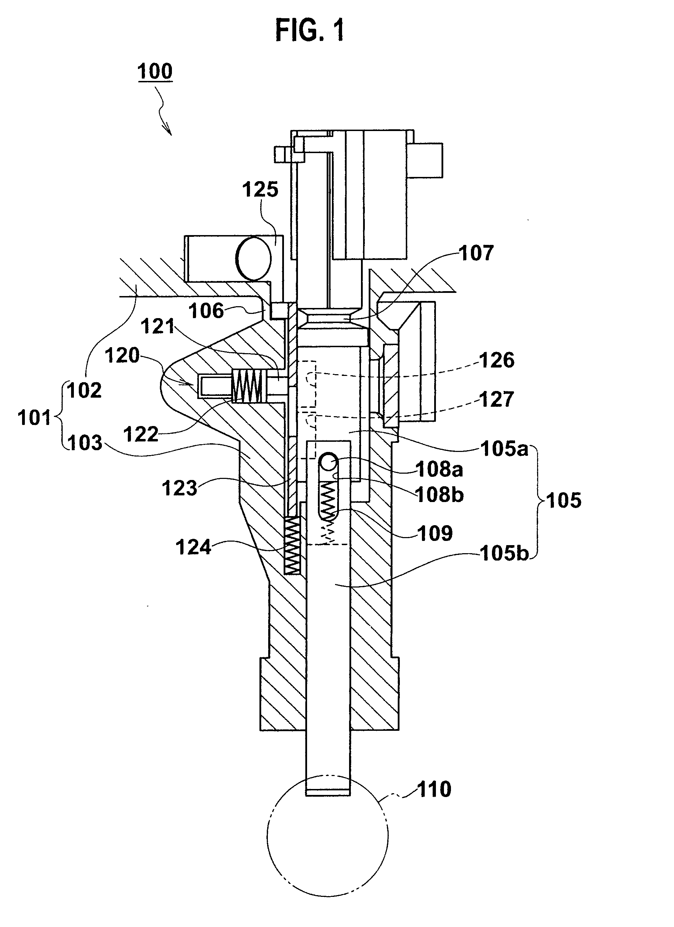

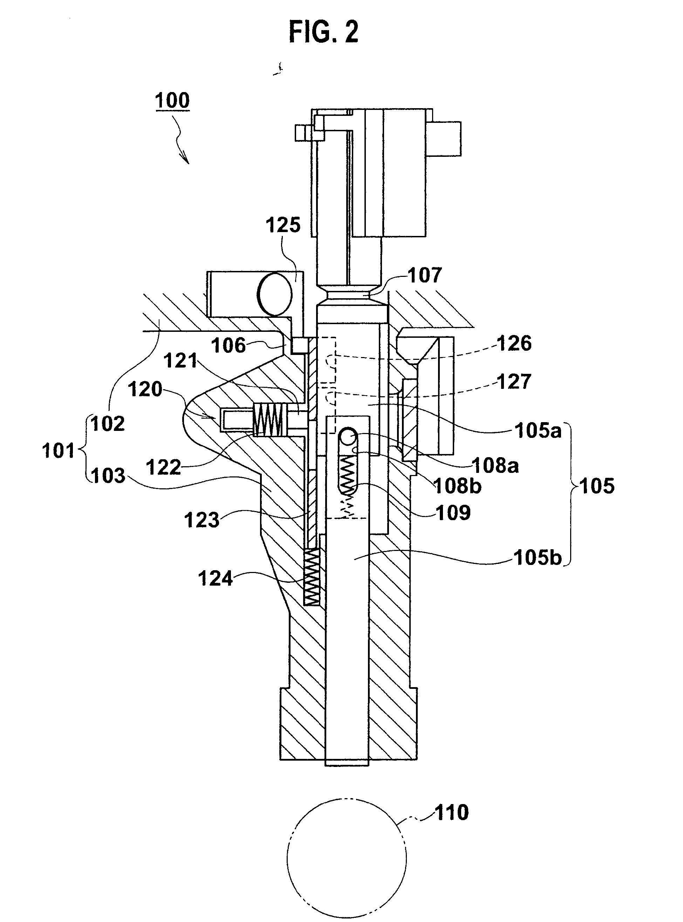

The top surface of the frame main body 102 which is covered with the cover accommodates: a drive motor (not illustrated) configured to be driven by a controller once an electronic key is authenticated upon communication between the electronic key and the controller made by the pressing action of a push-button type start/stop switch by a person carrying the electronic key; a cam member (not illustrated) configured to be rotated by the drive of this drive motor; and the like. A lock rod 105 having its top end side, located upward in the drawings, protruding on the frame main body 102 is movably accommodated in the rod guide part 103. In accordance with the rotation of the cam member (not illustrated), the lock rod 105 moves between a lock position (a position shown in Fig. 1) in which the lock rod 105 locks a steering shaft 110 and an unlock position (a position shown in Fig. 2) in which the lock rod 105 allows the steering shaft to rotate. The lock rod 105 is configured by including two members: a hanger part 105a configured to follow the cam member (not illustrated); and a lock main body 105b connected to the hanger part 105a. The hanger part 105a and the lock main body 105b are connected together by inserting a connecting pin 108a in a tip portion of the hanger part 105a into a long hole 108b in the lock main body 105b with a compression coil spring 109 being interposed therebetween.

Vulnerable parts 106, 107 having thickness thinner than the other parts are respectively provided in a base end portion of the rod guide part 103 and an intermediate portion of the hanger part 105a of the lock rod 105.

A deadlock section 120 includes: a lock pin 121 accommodated in a location lower than the vulnerable part 106 of the rod guide part 103; a first spring 122 configured to bias this lock pin 121 in its protruding direction; a trigger member 123 configured to inhibit the lock pin 121 from moving in the protruding direction; a second spring 124 configured to bias the trigger member 123 upward; a stopper 125 provided on the frame main body 102 side and configured to inhibit the trigger member 123 from moving upward; and first and second lock grooves 126, 127 formed in the hanger part 105a.

In the foregoing configuration, once the person carrying the electronic key presses the start/stop switch in order to drive the vehicle, the lock rod 105 moves due to the drive of the drive motor (not illustrated), and the electric steering lock device 100 thus moves from the steering lock position shown in Fig. 1 to the steering unlock position shown in Fig. 2. Thereafter, information that the steering lock is unlocked is transmitted to the vehicle body, and the engine is thus started. If an impact of a predetermined value or more to the steering lock device 100 by an event in which the knee of the driver hits the steering lock device 100, or the like, due to sudden deceleration of the vehicle being driven, the rod guide part 103 and the lock rod 105 are separated at the respective vulnerable parts 106, 107, thus reducing a shock which the driver receives.

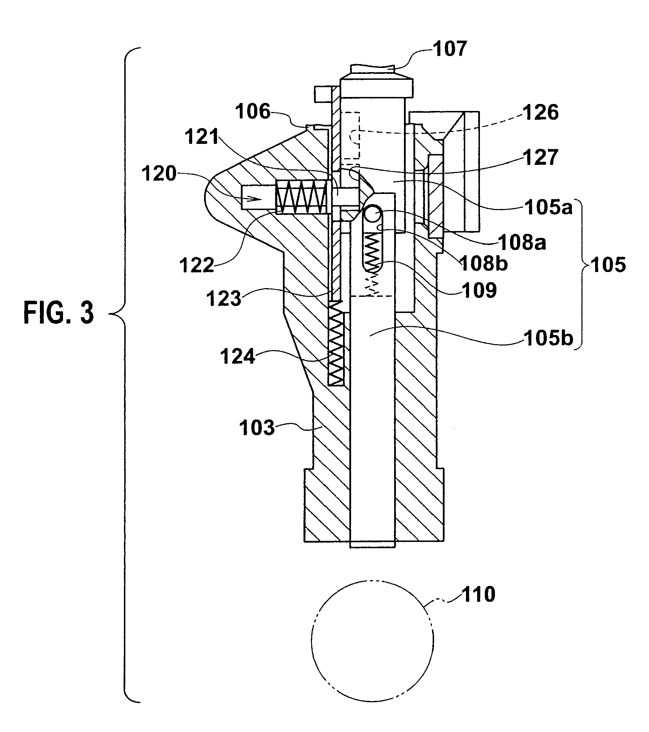

Once the rod guide part 103 and the lock rod 105 are separated at the respective vulnerable parts 106, 107, the trigger member 123 moves upward due to the spring force of the second spring 124 as shown in Fig. 3, so that the lock pin 121 is locked into the second lock groove 127 of the lock rod 105. Thereby, the electric steering lock device 100 is kept in the steering unlock state even after the separation. This allows the steering wheel to be steered freely while the vehicle is running. Thus, the driving safety is secured.

Once the person carrying the electronic key presses the start/stop switch in order to park the vehicle, the engine is stopped, and the lock rod 105 concurrently moves due to the drive of the driver motor (not illustrated). Thereby, the electric steering lock device 100 moves from the steering unlock position shown in Fig. 2 to the steering lock position shown in Fig. 1.

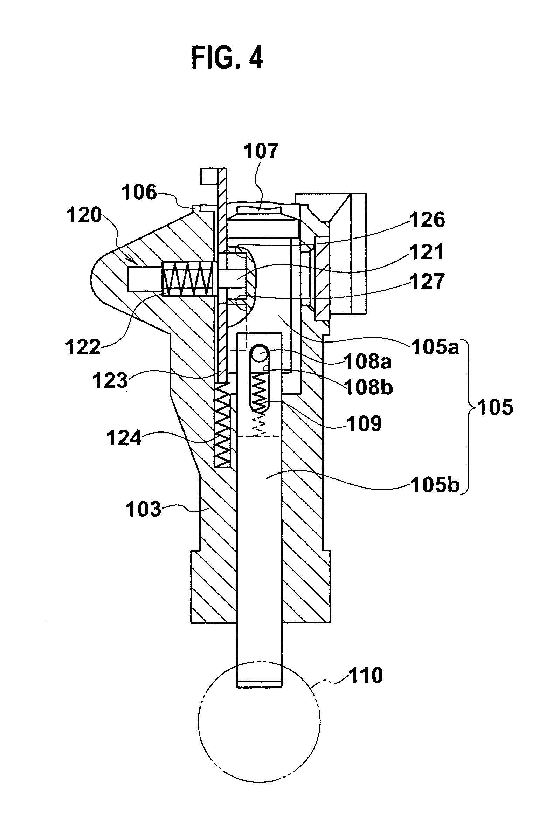

While the electric steering lock device 100 is in this steering lock state, if an impact of a predetermined value or more is applied to the steering lock device 100 attributable to an attack from the outside by a person trying to falsely unlock the electric steering lock device 100, the rod guide part 103 and the lock rod 105 are separated at the respective vulnerable parts 106, 107. Then, as shown in Fig. 4, the trigger member 123 moves upward due to a spring force of the second spring 124, so that the lock pin 121 is locked into the first lock groove 126 of the lock rod 105. Thereby, the electric steering lock device 100 is kept in the steering lock state even after the separation, and thus exhibits an excellent anti-burglary performance.

In the foregoing conventional example, however, the vulnerable part 107 of the hanger part 105a is provided in a position far above a connecting portion of the hanger part 105a and the lock main body 105b (a position of the connecting pin 108a). Accordingly, if the steering lock device 100 is separated while kept in the steering unlock state, as shown in Fig. 3, the broken portion of the hanger part 105a protrudes above the broken portion of the rod guide part 103 to a large extent. This is undesirable from a viewpoint of the safety.

### DISCLOSURE OF THE INVENTION

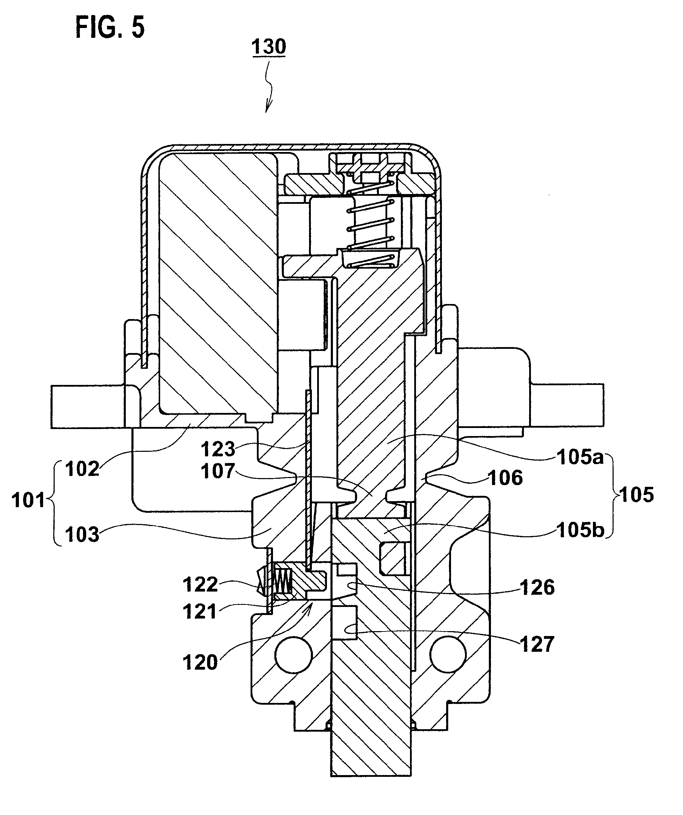

An electric steering lock device 130 shown in Fig. 5 can be conceived as means for solving the problem. This electric steering lock device 130 includes: the first lock groove 126 and the second lock groove 127 provided to the lock main body 105b of the lock rod 105; and the vulnerable part 107 provided immediately above the connecting portion of the hanger 105a. This makes it possible to make the height position of the vulnerable part 107 lower than that of the foregoing conventional example.

In Fig. 5, components which are the same as those of the foregoing conventional example will be denoted by the same reference numerals. Duplicated explanations will be omitted.

However, even in the electric steering lock device shown in Fig. 5, a broken portion of the hanger part 105a protrudes above a broken portion of the rod guide part 103 when the steering lock device 100 is separated while being in the steering unlock state.

In addition, as shown in Fig. 5, the lengthwise dimension of the hanger part 105a can be made shorter than that of the foregoing conventional example. However, the hanger part 105a should be further shorter for reducing the size of the electric steering lock device 130.

To this end, an object of the present invention is to provide a steering lock device which is capable of being reduced in size, and which is concurrently capable of securing the safety as much as possible even after the steering lock device is separated while being in the steering unlock state.

For the purpose of attaining the foregoing object, a first aspect of the present invention is a steering lock device including: a rod guide part mounted to a frame main body so as to protrude from the frame main body, the rod guide part having a vulnerable part; a lock rod arranged inside the rod guide part so as to be movable between a steering lock position and a steering unlock position, the lock rod including a hanger part and a lock main body connected to the hanger part, the lock rod having a vulnerable part; and a deadlock section configured to lock a tip side of the lock rod which is frontward of the vulnerable part of the lock rod at a position where the lock rod is located when each of the rod guide part and the lock rod are dividedly separated at positions of the respective vulnerable parts upon application of an excessive external force, wherein a hanger-side connecting part and the vulnerable part are provided to a tip portion of the hanger part.

Because the hanger-side connecting part and the vulnerable part are provided to the tip portion of the hanger part, the foregoing configuration makes the lengthwise dimension of the hanger part shorter, and consequently reduces the size of the steering lock device.

In addition, because the hanger-side connecting part and the vulnerable part are provided to the tip portion of the hanger part, a remaining portion of the lock rod which remains in a steering post is made shorter, and accordingly a broken portion of the hanger part is prevented from protruding from the a broken portion of the rod guide part. For this reason, the steering lock device is capable of securing the safety as much as possible even after the steering lock device is dividedly separated while being in the steering unlock state.

Moreover, the foregoing configuration may be arranged in a way that: the hanger-side connecting part of the hanger part is an engagement concave part; a main body-side connecting part of the lock main body is an engagement protrusion part which engages with the engagement concave part; and the vulnerable part of the hanger part is configured by including a pair of neck parts respectively formed in two sidewalls of the engagement concave part.

Furthermore, the foregoing configuration may be arranged in a way that: the hanger-side connecting part of the hanger part is a neck part; a main body-side connecting part of the lock main body is a pair of engagement hook parts which engage with the neck part; and the vulnerable part of the hanger is formed of the neck part.

### BRIEF DESCRIPTION OF THE DRAWINGS

Fig. 1 is a cross-sectional view showing an electric steering lock device according to a conventional example which is being in a steering lock state.
Fig. 2 is a cross-sectional view showing the electric steering lock device according to the conventional example which is being in a steering unlock state.
Fig. 3 is a cross-sectional view of the electric steering lock device according to the conventional example in which a deadlock section operates while the steering lock device is being in the steering unlock state.
Fig. 4 is a cross-sectional view of the electric steering lock device according to the conventional example in which the deadlock section operates while the steering lock device is being in the steering lock state.
Fig. 5 is a cross-sectional view of an example of an electric steering lock device which is in the steering lock state.
Fig. 6 shows an embodiment of an electric steering lock device according to the present invention, and is a front view of the electric steering lock device.
Fig. 7 shows the embodiment of the present invention, and is a magnified cross-sectional view of the electric steering lock device, which is in the steering unlock state, taken along the line 7-7 of Fig. 6.
Fig. 8 shows the embodiment of the present invention, and is a magnified cross-sectional view of the electric steering lock device which is in the steering lock state, taken along the line 7-7 of Fig. 6.
Fig. 9 shows the embodiment of the present invention, and is an exploded perspective view of a hanger part and a lock main body.
Fig. 10(a) shows a side view of the hanger part in the embodiment of the present invention; and Fig. 10(b) shows a front view of the hanger part in the embodiment of the present invention.
Fig. 11 shows the embodiment of the present invention, and is a cross-sectional view of a deadlock section which operates while the electric steering lock device is in the unlock state.
Fig. 12 shows the embodiment of the present invention, and is a cross-sectional view of the deadlock section which operates while the electric steering lock device is in the steering lock state.
Fig. 13 shows a different embodiment of the present invention, and is an exploded perspective view of a hanger part and a lock main body.
Fig. 14 shows the different embodiment of the present invention, and is a front view of the hanger part and the lock main body which are being connected together.

### BEST MODES FOR CARRYING OUT THE INVENTION

Descriptions will be provided hereinbelow for an embodiment of the present invention on a basis of the drawings.

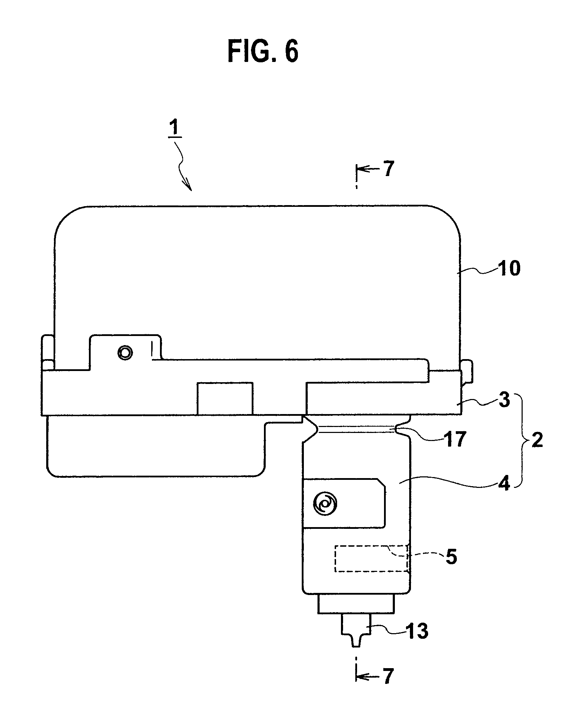

As shown in Figs. 6 to 8, an electric steering lock device 1 as a steering lock device includes a frame 2. This frame 2 includes a frame main body 3 and a rod guide part 4 protruding downward from the frame main body 3. A bolt attachment hole 5 is made in the rod guide part 4 in an appropriate location. By use of this bolt attachment hole 5, the electric steering lock device 1 is fixed to a steering post (not illustrated).

On the top surface of the frame main body 3 covered with a cover 10, accommodated are: an ignition key cylinder (not illustrated) which a person carrying an electronic key can operates to rotate; a motor unit 6 which is controlled to drive by the rotational operation of this ignition key cylinder; a cam member 7 fixed to an output shaft of this motor unit 6; and an upper end portion, in the drawings, of the lock rod 11 configured to move following the this cam member 7.

A rod guide hole 8 is made in the rod guide part 4. A lock rod 11 is movably arranged in this rod guide hole 8. At least a portion of the lock rod 11 which engages with a steering shaft (not illustrated) needs to be made of a member with a high rigidity. For this reason, the lock rod 11 is configured by including two members. One is a hanger part 12 made of a material which has a lower rigidity, and which is easily machinable. The other is a lock main body 13 made of a metal having a higher rigidity. Descriptions will be later provided for a structure for connecting the hanger part 12 and the lock main body 13 together.

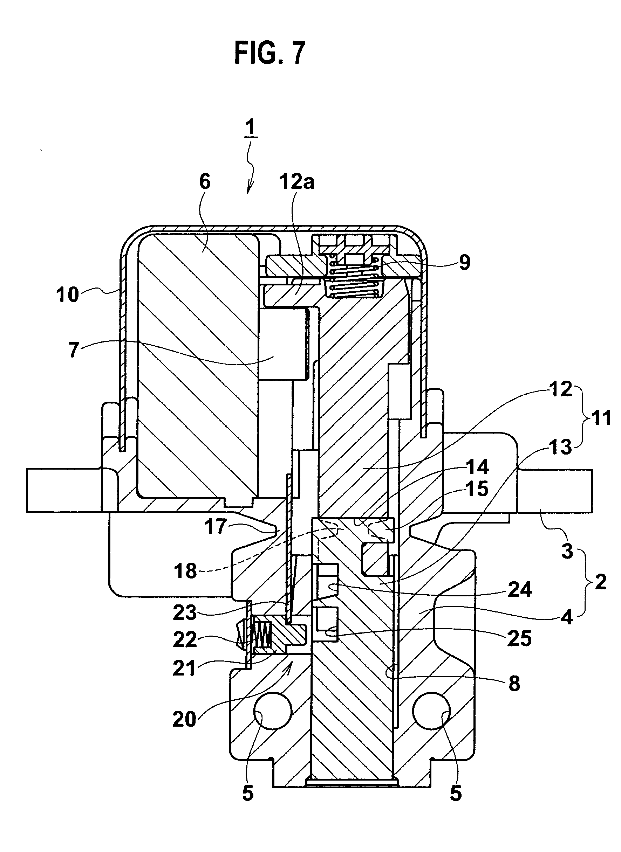

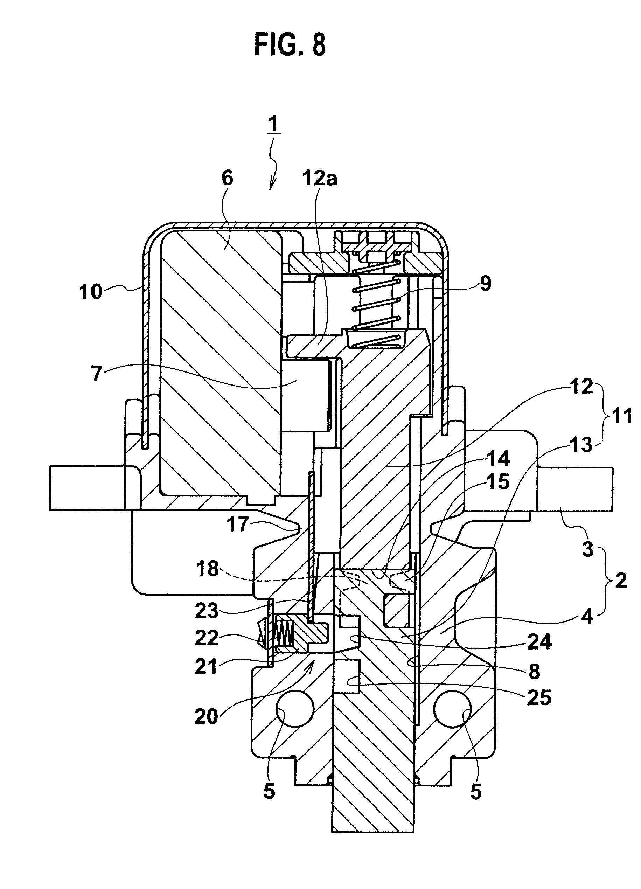

An upper end portion of the hanger part 12 protrudes above the frame main body 3. A protruding wall 12a of the upper end of the hanger part 12 is linked to the cam member 7. A spring 9 configured to bias the lock rod 11 toward its lock position is arranged in the upper end surface of the hanger part 12. A spring force of this spring 9 brings the protruding wall 12a of the hanger part 12 into contact with the cam member 7 with pressure. The lock rod 11 moves following a cam surface of the cam member 7, and thus moves between a steering lock position shown in Fig. 8 where the lock rod 11 locks the steering shaft (not illustrated) and a steering unlock position shown in Fig. 7 where the lock rod 11 allows the steering shaft (not illustrated) to rotate.

Vulnerable parts 17, 18 which are weaker than the other parts in terms of the strength are respectively provided in a base end portion of the rod guide part 4 and the hanger part 12 of the lock rod 11. The rod guide part 4 and the lock rod 11 are respectively configured to be dividedly separated at the locations of the respective vulnerable parts 17, 18 when an external force of a predetermined value or more is applied to the rod guide part 4 and the lock rod 11. The vulnerable part 17 of the rod guide part 4 is formed by making its thickness thinner than the rest of the rod guide part 4. Descriptions will be provided later for the position and structure of the vulnerable part 18 of the hanger part 12.

A deadlock section 20 includes: a lock pin 21 arranged in the tip side of the rod guide part 4 which is located frontward of the vulnerable part 17, the lock pin 21 being capable of moving between a resting position where the lock pin 21 does not lock the lock rod 11 and a lock position where the lock pin 21 locks the lock rod 11; a spring 22 configured to bias this lock pin 21 toward the lock position; a trigger member 23 configured to hold the lock pin 21 at the resting position in order that the lock pin 21 should not move to the lock position; and first and second lock grooves 24, 25 formed in the lock main body 13 of the lock rod 11.

The trigger member 23 is supported by an assembling force between the cover 10 and the frame main body 3. When the rod guide part 4 is dividedly separated at the vulnerable part 17, or when the cover 10 is detached from the frame main body 3, the trigger member 23 releases the movement restraint of the lock pin 21.

The first lock groove 24 is set in a position to face to the lock pin 21 when the lock rod 11 is located in the lock position. The second lock groove 25 is set in a position to face to the lock pin 21 when the lock rod 11 is located in the unlock position.

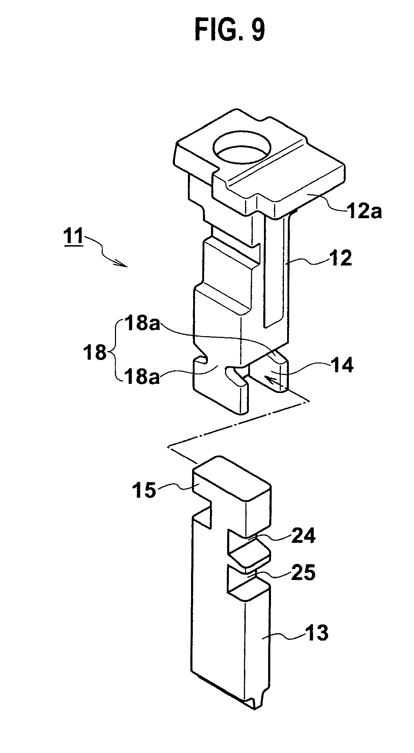

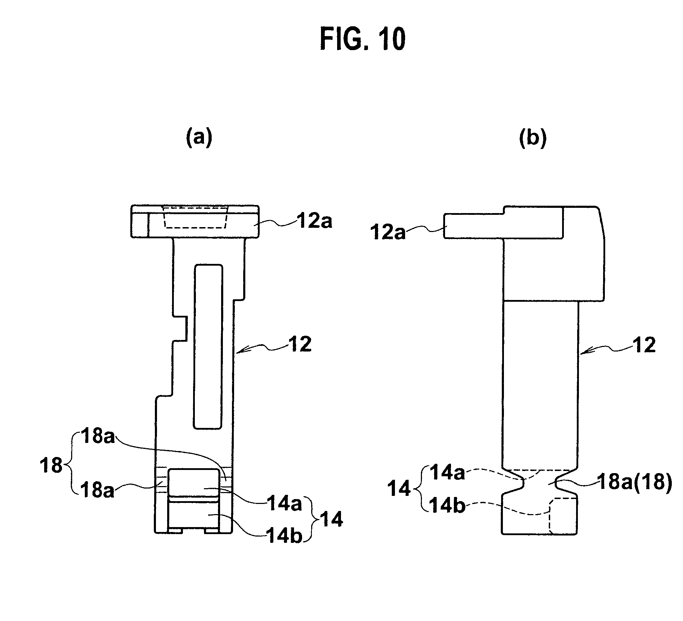

Next, descriptions will be provided for a connecting structure between the hanger part 12 and the lock main body 13 of the lock rod 11 as well as the position and structure of the vulnerable part 18 of the hanger part 12. As shown in Figs. 9, 10(a), and 10(b) in detail, an engagement concave part 14 which is a hanger-side connecting part is formed in a tip of the hanger part 12. The engagement concave part 14 is configured by including: a penetration part 14a; and a groove part 14b formed under this penetration part 14a. An engagement protrusion part 15 which is a main body-side connection part, and which matches the shape of the engagement concave part 14, is provided to a top end of the lock main body 13. The engagement of the engagement protrusion part 15 of the lock main body 13 with the engagement concave part 14 of the hanger part 12 connects the hanger part 12 and the lock main body 13 together. The vulnerable part 18 of the hanger part 12 is configured by including a pair of neck portions 18a which are respectively formed on the two sidewalls of the engagement concave part 14 and in the same position as the penetration part 14a. For this reason, the position of the vulnerable part 18 in its longitudinal direction coincides with the position of the engagement concave part 14, which is the hanger-side connecting part, in its longitudinal direction.

Once a person carrying an electronic key turns the ignition key cylinder (not illustrated) from its OFF position to its ON position in order to drive the vehicle, the foregoing configuration causes the lock rod 11 to move due to the drive of the motor unit 6 from the steering lock position shown in Fig. 8 to the steering unlock position shown in Fig. 7. Thereafter, once the ignition key cylinder is moved to an engine starting position, the engine is started.

If the vehicle is decelerated suddenly during driving and if an impact of a predetermined value or more is applied to the rod guide part 4 and the lock rod 11 due to the fact that the driver bangs his knee against the electric steering lock device 1, the rod guide part 4 and the lock rod 11 are dividedly separated at the respective vulnerable parts 17, 18. This reduces a shock which the driver suffers.

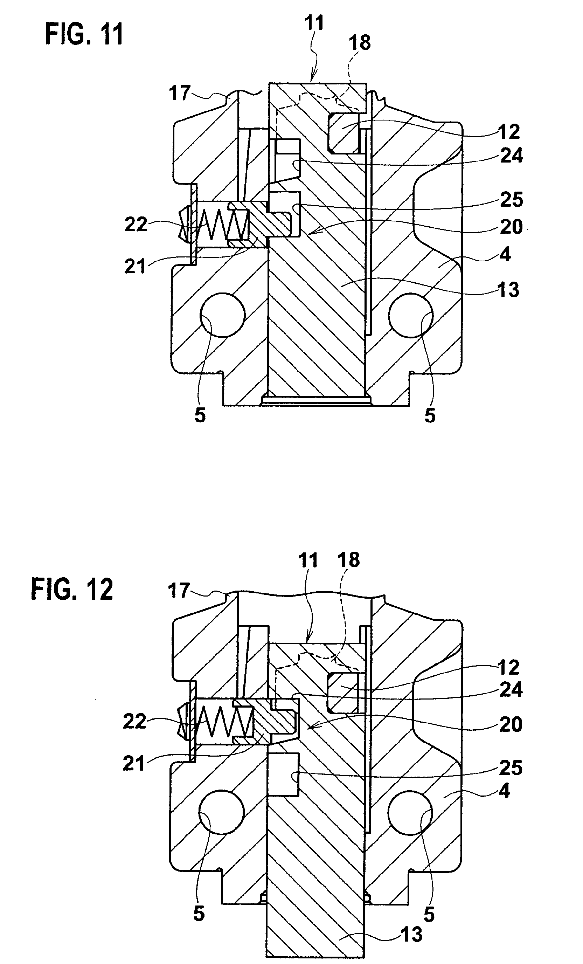

Once the rod guide part 4 and the lock rod 11 are dividedly separated at the respective vulnerable parts 17, 18, the trigger member 23 no longer restrains the lock pin 21 as shown in Fig. 11, and the lock pin 21 is thus locked into the second lock groove 25 of the lock rod 11. Thereby, the electric steering lock device 1 is kept in the steering unlock state even after the separation. Keeping the electric steering lock device 1 in the steering unlock state allows the steering wheel to be steered freely while the vehicle is running, and accordingly the driving safety is secured.

On the other hand, once the person carrying the electronic key turns the ignition key cylinder from the engine starting position to an OFF position in order to park the vehicle, the engine is stopped. Subsequently, the lock rod 11 moves due to the drive of the motor unit 6 from the steering unlock position shown in Fig. 7 to the steering lock position shown in Fig. 8.

While the electric steering lock device 1 is in this steering lock state, if an impact of a predetermined value or more is applied to the rod guide part 4 and the lock rod 11 attributable to an attack from the outside by a person trying to falsely unlock the electric steering lock device 1, the rod guide part 4 and the lock rod 11 are dividedly separated at the respective vulnerable parts 17, 18. Then, as shown in Fig. 12, the trigger member 23 no longer restrains the lock pin 21, and the lock pin 21 is thus locked into the first lock groove 24 of the lock rod 11. Thereby, the electric steering lock device 1 is kept in the steering lock state even after the separation. Consequently, the person who tries to falsely unlock the steering lock device 1 cannot turn the steering wheel freely. The electric steering lock device 1 exhibits an excellent anti-burglary performance.

The engagement concave part 14, which is the hanger-side connecting part, and the vulnerable part 18 are provided to the tip portion of the hanger part 12. Thus, the present embodiment makes it possible to accordingly shorten the lengthwise dimension of the hanger part 12. Consequently, the electric steering lock device 1 can be reduced in size. Furthermore, the engagement concave part 14, which is the hanger-side connecting part, and the vulnerable part 18 are provided to the tip portion of the hanger part 12. Thus, the present embodiment makes it possible to shorten a remaining portion of the lock rod 11 which remains in the steering post (not illustrated), and accordingly makes it possible to prevent a broken portion of the hanger part 12 from protruding above the broken portion of the rod guide part 4. Consequently, the steering lock device 1 is capable of securing the safety as much as possible even after being dividedly separated while in the steering unlock state.

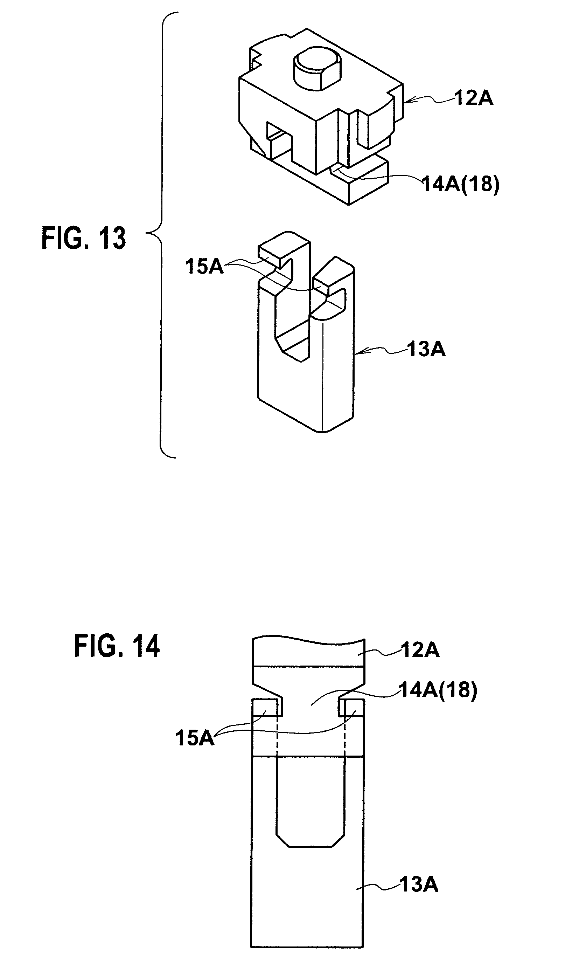

Figs. 13 and 14 show a different embodiment of the present invention. Fig. 13 is an exploded perspective view of a hanger part 12A and a lock main body 13A. Fig. 14 is a front view of the hanger part 12A and the lock main body 13A which are being connected together.

As shown in Figs. 13 and 14, a neck part 14A which is a hanger connecting part, and which has a thickness thinner than the rest of a hanger part 12A, is formed in the tip of the hanger part 12A. A pair of engagement hooks 15A which are a main body-side connecting part are provided to the top end of the lock main body 13A. When the pair of engagement hooks 15A of the lock main body 13A engage with the neck part 14A of the hanger part 12A, the hanger part 12A and the lock main body 13A are connected together. The vulnerable part 18 of the hanger part 12A is configured by including the neck part 14A. In other words, the neck part 14A functions as both the hanger-side connecting part and the vulnerable part 18. For this reason, the position of the neck part 14A which is the hanger-side connecting part in its longitudinal direction coincides with the position of the vulnerable part 18 in its longitudinal direction.

The rest of the configuration is the same as that of the foregoing embodiment. For this reason, duplicated descriptions are avoided.

This different embodiment offers the same operation/working effect as the foregoing embodiment.

Instead of the foregoing embodiments, various modifications can be conceived for the structure of the hanger-side connecting part and the structure of the main body-side connecting part.

The foregoing embodiments show a case where the present invention is applied to the electric steering lock apparatus 1. Nevertheless, it goes without saying that the present invention is also applicable to a mechanical steering lock device of a type which moves the lock rod 11 by using an operational force from a mechanical key as a power.

## Claims

1. A steering lock device, comprising:
a rod guide part (4) mounted to a frame main body (3) so as to protrude from the frame main body, the rod guide part having a vulnerable part (17);
a lock rod (11) arranged inside the rod guide part so as to be movable between a steering lock position and a steering unlock position, the lock rod including a hanger part (12) and a lock main body (13) connected to the hanger part, the lock rod having a vulnerable part (18), and
a deadlock section (20) configured to lock a tip side of the lock rod which is frontward of the vulnerable part of the lock rod at a position where the lock rod is located when each of the rod guide part and the lock rod are dividedly separated at positions of the respective vulnerable parts upon application of an excessive external force, **characterised in that**
a hanger-side connecting part and the vulnerable part (18) are provided to a tip portion of the hanger part (12).

2. The steering lock device according to claim 1, wherein
the hanger-side connecting part of the hanger part (12) is an engagement concave part (14),
a main body-side connecting part of the lock main body (13) is an
engagement protrusion part (15) which engages with the engagement concave part, and
the vulnerable part of the hanger part includes a pair of neck parts (18a) respectively formed in two sidewalls of the engagement concave part (14).

3. The steering lock device according to claim 1, wherein
the hanger-side connecting part of the hanger part is a neck part (14a), a main body-side connecting part of the lock main body is a pair of engagement hook parts (15a) which engage with the neck part, and
the vulnerable part (18) of the hanger part (12) is formed of the neck part.

## Patentansprüche

1. Lenkschlossvorrichtung, die umfasst:
einen Stangenführungsteil (4), der an einem Rahmenhauptkörper (3) derart montiert ist,
dass er von dem Rahmenhauptkörper vorsteht, wobei der Stangenführungsteil einen Sollbruchteil (17) aufweist,
eine Sperrstange (11), die in dem Stangenführungsteil angeordnet ist und zwischen einer Lenksperrposition und einer Lenkfreigabeposition bewegt werden kann, wobei die Sperrstange einen Aufhängerteil (12) und einen mit dem Aufhängerteil verbundenen Sperrhauptkörper (13) umfasst, wobei die Sperrstange einen Sollbruchteil (18) aufweist, und
einen Blockierungsabschnitt (20), der konfiguriert ist, um eine Spitzenseite der Sperrstange, die vor dem Sollbruchteil der Sperrstange vorgesehen ist, an einer Position zu sperren,
wo die Sperrstange positioniert ist, wenn der Stangenführungsteil und die Sperrstange jeweils an den Positionen der entsprechenden Sollbruchteile durchtrennt sind, nachdem eine übermäßige externe Kraft ausgeübt wurde, **dadurch gekennzeichnet, dass**
ein Aufhänger-seitiger Verbindungsteil und der Sollbruchteil (18) an einem Spitzenteil des Hängerteils (12) vorgesehen sind.

2. Lenksperrvorrichtung nach Anspruch 1, wobei
der Aufhänger-seitige Verbindungsteil des Aufhängerteils (12) ein Eingreifvertiefungsteil (14) ist,
ein Hauptkörper-seitiger Verbindungsteil des Sperrhauptkörpers (13) ein Eingreifvorsprungsteil (15) ist, der in den Eingreifvertiefungsteil eingreift, und
der Sollbruchteil des Aufhängerteils ein Paar von Halsteilen (18a) umfasst, die jeweils in zwei Seitenwänden des Eingreifvertiefungsteils (14) ausgebildet sind.

3. Lenksperrvorrichtung nach Anspruch 1, wobei
der Aufhänger-seitige Verbindungsteil des Aufhängerteils ein Halsteil (14a) ist,
ein Hauptkörper-seitiger Verbindungsteil des Sperrhauptkörpers ein Paar von Eingreifhakenteilen (15a) ist, die in den Halsteil eingreifen, und
der Sollbruchteil (18) des Aufhängerteils (12) durch den Halsteil gebildet wird.

## Revendications

1. Dispositif de verrouillage de direction, comprenant :
une pièce (4) de guidage de tige, montée sur le corps principal (3) d'un cadre de façon à dépasser du corps principal du cadre, la pièce de guidage de tige présentant une partie vulnérable (17),
une tige de verrouillage (11) agencée à l'intérieur de la pièce de guidage de tige de façon à pouvoir se mouvoir entre une position de verrouillage de direction et une position de déverrouillage de direction, la tige de verrouillage incluant une pièce de suspension (12) et un corps principal (13) de verrouillage raccordé à la pièce de suspension, la tige de verrouillage possédant une partie vulnérable (18), et
une section d'arrêt brusque (20) configurée pour verrouiller un côté effilé de la tige de verrouillage qui se trouve à l'avant de la partie vulnérable de la tige de verrouillage à une position où la tige de verrouillage est située lorsque chacune des pièces de guidage de tige et la tige de verrouillage sont séparées de manière divisée à des positions des parties vulnérables respectives lors de l'application d'une force externe excessive,
**caractérisé en ce que**
une partie de raccordement du côté de la suspension et la pièce vulnérable (18) sont ménagées à une partie effilée de la pièce de suspension (12).

2. Dispositif de verrouillage de direction selon la revendication 1, dans lequel
la partie de raccordement de la pièce de suspension (12) du côté de la suspension est une pièce concave de mise en prise (14),
une pièce de raccordement du côté du corps principal appartenant au corps principal (13) de verrouillage est une pièce de protubérance (15) utilisée à la mise en prise qui vient en prise avec la pièce concave de mise en prise, et
la partie vulnérable de la partie de suspension inclut une paire de cols (18a) formés respectivement dans deux parois latérales de la pièce concave de mise en prise (14).

3. Dispositif de verrouillage de direction selon la revendication 1, dans lequel
la pièce de raccordement du côté de la suspension appartenant au corps de suspension est une pièce formant col (14a),
une pièce de raccordement du côté du corps principal appartenant au corps principal est une paire de pièces formant crochets (15a) de mise en prise qui viennent s'accrocher avec le col, et
la partie vulnérable (18) de la pièce de suspension (12) est formée de la partie formant col.
